# EUROPÄISCHE PATENTANMELDUNG

(11) **EP 1 265 090 A2**
(43) Veröffentlichungstag der Anmeldung: **11.12.2002**
(21) Anmeldenummer: 02007066.0
(22) Anmeldetag: 27.03.2002
(51) Int. Cl.: G02B 15/04, G02B 3/14

(54) **Optisches System mit verstellbarer Brennweite**

(30) Priorität: 30.03.2001 DE 10113694
(71) Anmelder: Dieckmann, M., 2596 SX Den Haag (NL); Dierks, K., Dr., 22453 Hamburg (DE); Niederstrasser, D., Dr., 24784 Westerrönfeld (DE)
(72) Erfinder: Dieckmann, M., 2596 SX Den Haag (NL); Dierks, K., Dr., 22453 Hamburg (DE); Niederstrasser, D., Dr., 24784 Westerrönfeld (DE)

(57) **Zusammenfassung**

Gegenstand der Erfindung ist ein in Brennweite verstellbares optisches System zur Sehschärfeneinstellung, insbesondere zur Verwendung als implantierte Sehhilfe bis hin zu Anwendungen zur Ausrichtung von optischen Instrumenten bzw. deren Komponenten, die beispielsweise auf Himmelskörper-Umlaufbahnen betrieben werden. Das optische System arbeitet derart, dass optisch wirksame feste oder flüssige Elemente, die ein optisches System bilden, durch ein berührungslos von außen wirkendes Kraftvektorfeld oder mehreren in Qualität unterschiedlichen Kraftvektorfeldern und deren absolute oder relative Änderungen mit einem eingebauten Antriebsmechanismus mit und ohne externer Hilfsenergie auf Gewicht, Schwimmer oder induzierte Ströme basierend, bewegt werden, derart dass sich Brennweite oder Abbildungseigenschaften des optischen Systems kontinuierlich, definiert und reproduzierbar verändern lassen. Das genante System befindet sich u.a. zum Schutz vor äußeren Einflüssen in einem Behälter, der Teil des optisch wirksamen Systems ist, das zusätzlich mit Festkörpern und Flüssigkeit gefüllt, die optisch wirksam sind oder Teil des Antriebsmechanismus sind.

## Beschreibung

In Brennweite verstellbares optisches System zur Sehschärfeneinstellung insbesondere zur Verwendung als implantierte Sehhilfe und zur Ausrichtung von optischen Instrumenten bzw. deren Komponenten, die auf Himmelskörper-Umlaufbahnen betrieben werden.

### Erläuterung zum Anwendungsspektrum der gemachten Erfindung

1. Durch externe Felder können auf mechanische Systeme Kraftwirkungen ausgeübt werden. Diese Wirkungen können aus Bewegungen oder Verformungen bestehen. Ist das System Teil eines optischen Systems, kann man so die optischen Eigenschaften gezielt ändern. Beispielsweise erfährt ein Körper, der sich auf einer Umlaufbahn um die Erde befindet, Schwankungen der Restbeschleunigungskräfte, die u.a. zu den Gradienten der beispielsweise Erdbeschleunigung korrespondieren. Diese Schwankungen stellen beispielsweise für präzise auf Ziele auszurichtende Instrumente ein Problem dar, dass durch eine Mechanik, die auf die beispielsweise Restbeschleunigungsschwankungen eine Ausrichtungs- oder Bildschärfenkompensation aktiv führt, bewältigt werden kann.
2. Es ist bekannt, dass im Rahmen von Kataraktoperationen und als refraktivchirurgischer Eingriff die Augenlinse aus dem Auge entfernt und durch eine Kunstlinse ersetzt werden kann. Das Auge verliert dabei die Akkommodationsfähigkeit, da die eingesetzten Implantate ihre Brechkraft nicht ändern können. Das System Auge hat dann nur einen festen Brennpunkt, sodass für die scharfe Abbildung auf die Netzhaut für entsprechend andere Entfernungen optische Hilfsmittel, meistens in Form einer Brille, erforderlich werden.

### Beispiele für den Stand der Technik

Pseudoakkommodative Linsen nach dem Prinzip der multizentrischen oder diffraktiven Optik sind existent. Hiermit kann ohne zusätzliche optische Hilfe eine scharfe Abbildung von Objekten des Fern- und des Nahbereichs auf der Netzhaut des Auges erzeugt werden. Aus physikalischen Gründen kommt es hierbei allerdings zur Verminderung der Kontrastschärfe und des Sehens bei unzureichender Ausleuchtung wie beispielsweise in der Dämmerung. Geforscht wird insbesondere an Methoden der kapselerhaltenen Linsenentfemung und anschließendes Auffüllen des Kapselsackes mit einer hochviskösen Substanz. Unter Nutzung des eigenen Akkommodationsapparats soll die Brechkraft der neuen Kunstlinse dann geändert werden. Es bleibt hierbei unberücksichtigt, dass nach der Linsenoperation der verbleibende Kapselsack schrumpfen und vernarben kann, sodass das Ergebnis nachteilig beeinflusst würde. Außerdem ist nicht sicher bekannt, ob die verbliebene Akkommodations des Auges überhaupt noch eine solche Aulgabe erfüllen kann. Es werden zudem höhere Anforderungen an Operateur und chirurgisches Instrumentarium gestellt, welches sich ebenfalls noch in der Entwicklung befindet. Eine herkömmliche Beseitigung des vernarbten Kapselsackes mittels Laser-Kapsulotomie oder chirurgischer Nachstardiszision wäre wahrscheinlich auch nicht ohne Funktionseinbußen möglich.

Andere Bemühungen bestehen in einem System, das die Kunstlinse über magnetische Abstoßungskräfte durch permanent Magnete auf der optischen Achse verschieben soll. Hier würde der Eingriff auch chirurgisch anspruchsvoll und für den Patienten belastender und auch eine ausreichende Funktion des restlichen Akkommodationsapparates wird vorausgesetzt. Außerdem dürften bei magnetischen Implantaten keine magnetische Resonanz Diagnostik mehr eingesetzt werden, was angesichts des überwiegend älteren Patientenkollektivs eine signifikante diagnostische Einschränkung darstellt. Auch andere unkontrollierbare Einflüsse von außen auf das Magnetfeld wären nachteilig.

### Beschreibung der Erfindung

Die in der vorliegenden Erfindung und im Patentanspruch aufgezeigten, beziehungsweise spezifizierten Problemlösungen, ermöglichen den Erhalt der Akkommodation nach einer Linsenoperation bestmöglich, ohne dass hierdurch Nachteile, wie bei den bisherigen pseudoakkommodativen Linsen entstehen, und ohne den Eingriff chirurgisch wesentlich anspruchsvoller zu gestalten und ohne die Notwendigkeit komplexere, störanfälligere elektrische oder magnetische Bauteilen einzusetzen. Das Problem wird durch die im Patentanspruch aufgeführten Merkmale gelöst.

Die mit der Erfindung erzielten Vorteile bestehen insbesondere darin, dass wie bisher nur ein festes Implantat, als ein nach außen geschlossenes System, in das Auge mit identischer chirurgischer Operationstechnik eingesetzt wird. Es bedarf weder einer wesentlichen Neuerung des chirurgischen Instrumentariums, noch einer Zusatzqualifikation des Chirurgen und der Eingriff wird weiterhin für den Patienten nicht belastender. Es kann außerdem auf altbekannte Materialien zurückgegriffen werden, die sich in langjähriger klinischer Anwendung bewährt haben. Das System ist nicht durch äußere Magnetfelder störanfällig, wodurch die magnetische Resonanz Diagnostik bei Implantatträgem weiterhin möglich bleibt.

Das u.a. durch die individuelle Narbenbildung und die Kapselsackeintrübung schlecht steuerbare Problem der Nachstarbildung kann mit altbekannten Verfahren, wie z.B. Laser bewirkte Zerstörung dieser Eintrübung beseitigt werden, ohne Funktionseinbußen des Auges hinnehmen zu müssen.

Für die Akkommodation mittels der Implantate gemäß der vorliegenden Erfindung, ist keine restliche Akkommodationsfähigkeit des Auges, die bislang nicht ausreichend verstanden ist, für die einwandfrei Funktion der Erfindung erforderlich ist.

Es kommt zu keiner Doppelabbildung mit daraus resultierenden Minderungen der Kontrast- und Dämmerungssehschärfe wie bei diffraktiven oder multifokalen Linsen.

Ausführungsbeispiele der Erfindung sowie theoretische und praktische Aspekte zum besseren Verständnis der Erfindung und der Ausführungsvarianten sowie ihrer Kombinationen sind in den folgenden Zeichnungen dargestellt und werden im weitem näher beschrieben.

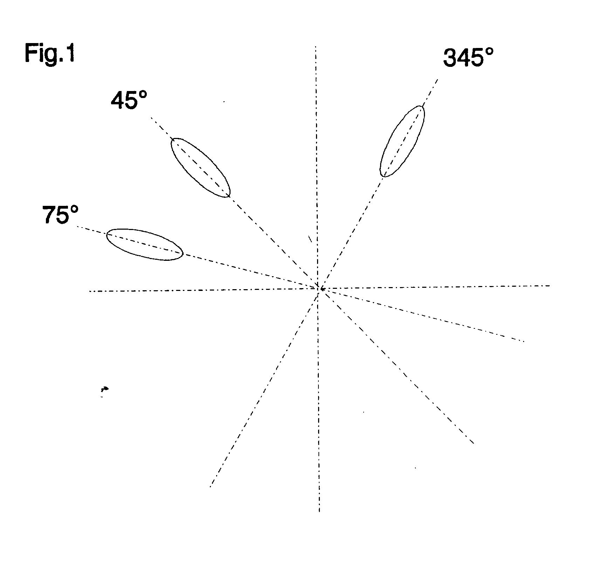

Es zeigen
- **Fig. 1:**: Die Position eines optischen Systems als Funktion möglicher relativer Positionen in einem Kraftektorfeld und angegebene Winkel zu einem möglichen Referenzsystem.

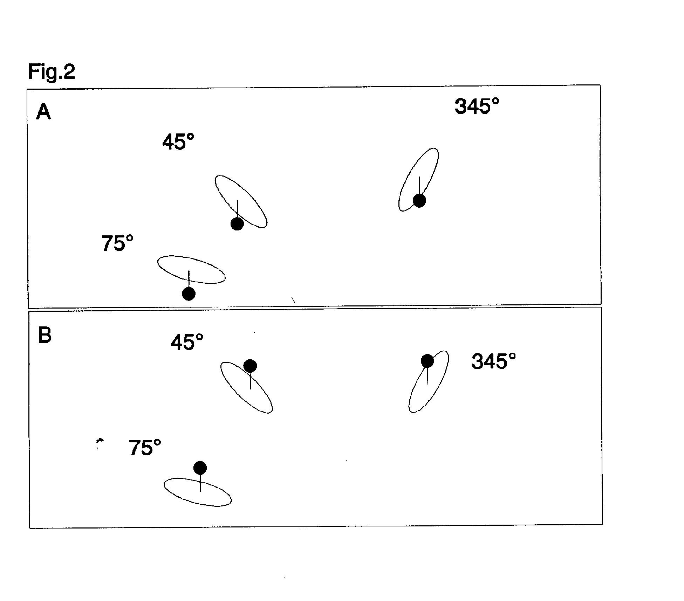

- **Fig. 2:**: Ein Gewicht oder Pendel als schwarzer Punkt verbunden mit einem linsenförmigen Gebilde, das optische System andeutend, als Beispiel in "A" für die Verdeutlichung der Wirkung der Schwer- oder Gravitationskraft, sowie ein Schwimmer, in gleicher zur vorhergehenden Schematisierung, als Beispiel "B" für die Verdeutlichung von entgegengesetzt zur Schwer- oder Gravitationskraft wirkenden Auftriebskräften ist an einer schematischen Linse befestigt abgebildet, sodass die Gegensätzlichkeit der Bewegungsrichtungen, wie beispielsweise auf der Erdoberfläche anzutreffend, herausgestellt wird.

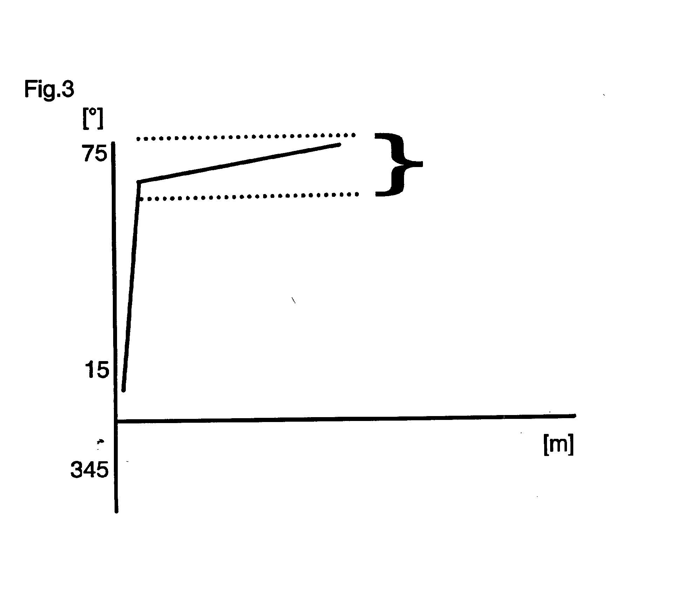

- **Fig. 3:**: Ein schematisches Diagram mit der Spaltbreite zwischen mindestens zwei optischen Elementen auf der Abszisse und dem Neigungswinkel, beispielsweise des Kopfes, auf der Ordinate exemplarisch für ein System bei dem ein optisches Element gemäß einer wirkenden Kraft vorauseilt und das andere Element diesem relativ, durch beispielsweise feste Arretierung in einem Referenzsystem, zurückbleibt, entsprechend einer Systemauslegung nach Fig. 2 Beispiel "A". Das Diagram zeigt einen nicht linearen Verlauf, bei dem beispielsweise die Spaltbreite bei der Vomeigung bei einem gegebenen Beispielswinkel relativ abrupt, trotz relativ kleiner Winkeländerung, sehr viel stärker zunimmt als in anderen Funktionsverläufen. Der Initial und Endwert der Funktion, der Anstieg am Kurvenbeginn, sowie der Kurvenverlauf, der eine Abstandszunahme oder eine ansteigende Variable an anderer Stelle gemessen für die Bewegung der optisch wirksamen Elemente darstellen kann, der in der Gesamtheit auch an anderen Stellen unstetig sein kann und durch eine geschweifte Klammer angedeutet ist, lässt sich auch durch die Dimensionierung der Tribotechnikvariablen, wie z.B. Haftreibung, frei gestalten. Diese Darstellung gilt, entsprechend der zu Fig. 2 gegebenen Erklärung, nur, dass sich für das Beispiel "B" die Verschiebungsrichtung der Elemente, bei entsprechender, Bauart umkehren würde.

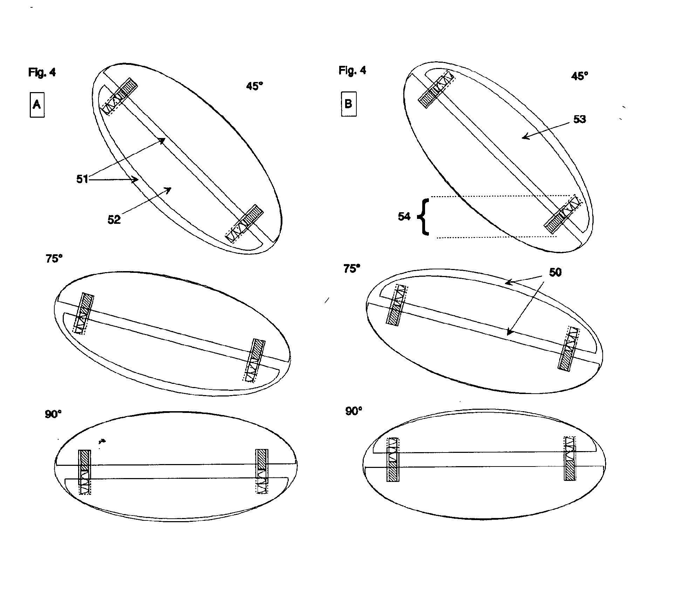

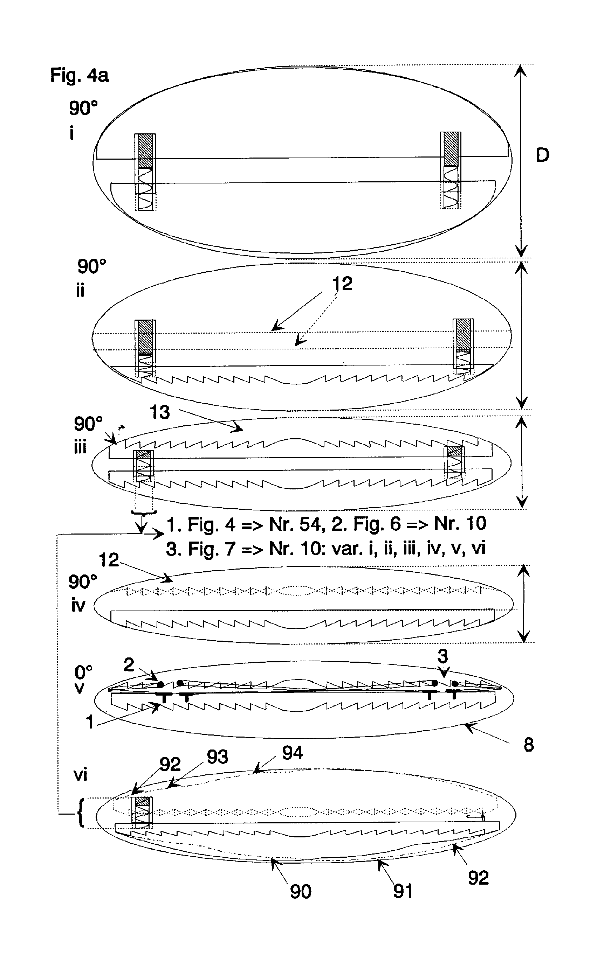

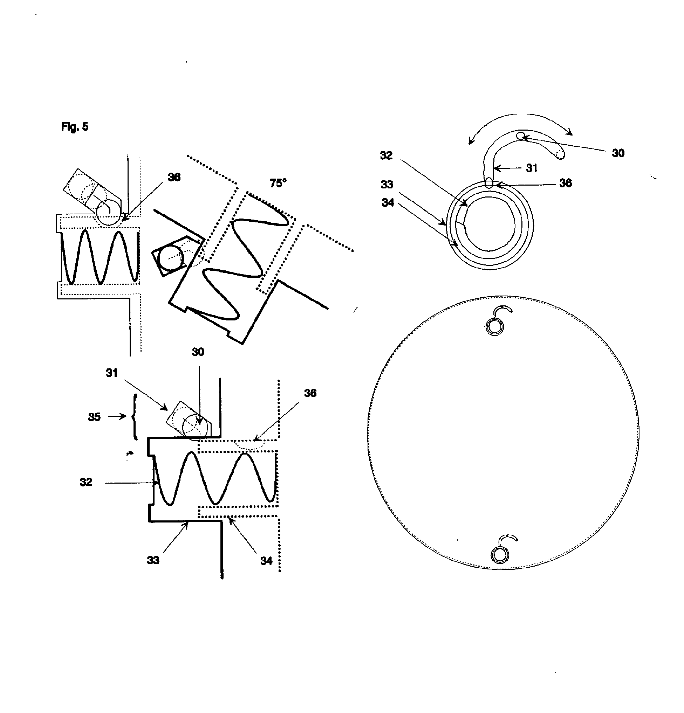

- **Fig. 4**: Zwei schematisierte Ausführungsbeispiele optischer Systeme der Erfindung, die wie nach Fig. 2 Beispiel "A" und Beispiel "B" gegebenen Erläuterungen gemäß arbeiten würden. Zu berücksichtigen wäre, dass zur Erreichung der in "B" dargestellten Funktionsweise der mit Pfeilen und der Nummer 50 gekennzeichnete Bereich oder das Volumen mit einem viskosen Medium ausgefüllt werden müsste, welches eine höhere Dichte aufweist als das durch Nummer 53 gekennzeichnete optische Element, damit dieses durch Nummer 53 gekennzeichnete Element sich in dem Medium 50 befindend, bei Einwirkung von Kraft aufsteigen würde. Umgekehrt wäre für "A" der mit 51 gekennzeichnete Bereich oder das Volumen mit einem ebensolchen Medium zu füllen, dass hingegen eine Dichte unterhalb der des Elements 52 haben müsste. Gegebenenfalls zu schaffende Ausgleichskanäle, die auch beispielsweise zur geeigneten Dämpfungseinstellung ausgeführt werden könnten, für die erwähnten Medien, sind in diesen Schemen wie auch in den Folgenden möglich, jedoch der Klarheit wegen nicht dargestellt. Das mit 54 und einer geschweiften Klammer gekennzeichnete Element ist in Fig. 5. genauer beschrieben. Für beide gezeigten Ausführungsbeispiele gilt, dass sich die Elemente 53 und 52 beweglich in einer Hülle, z.B. hermetischer Behälter befinden, der beispielsweise fest verbunden mit dem gegenüberliegenden optischen Element oder Halblinse wäre.

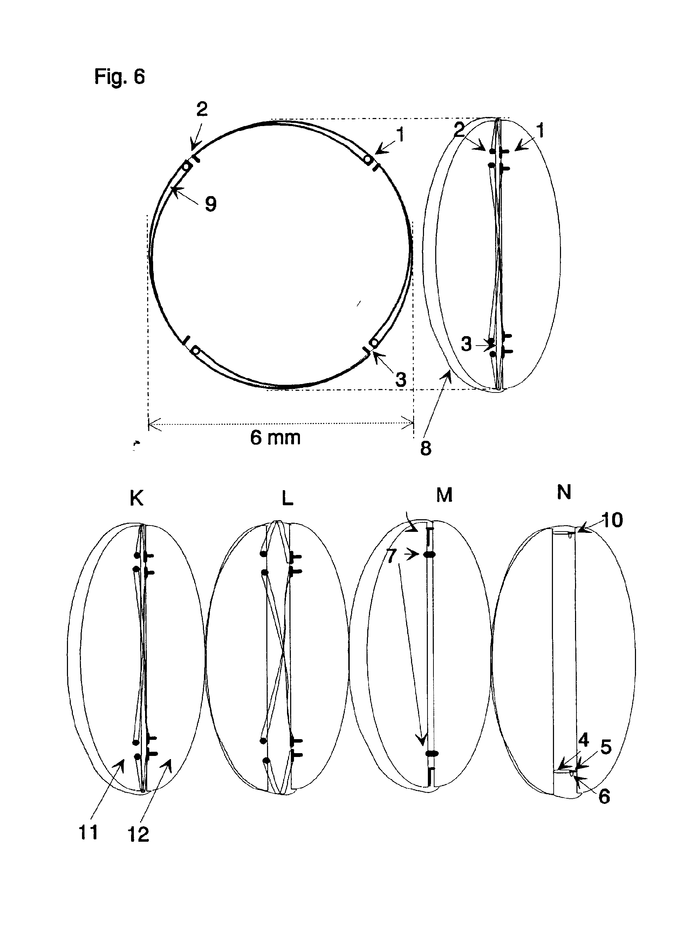

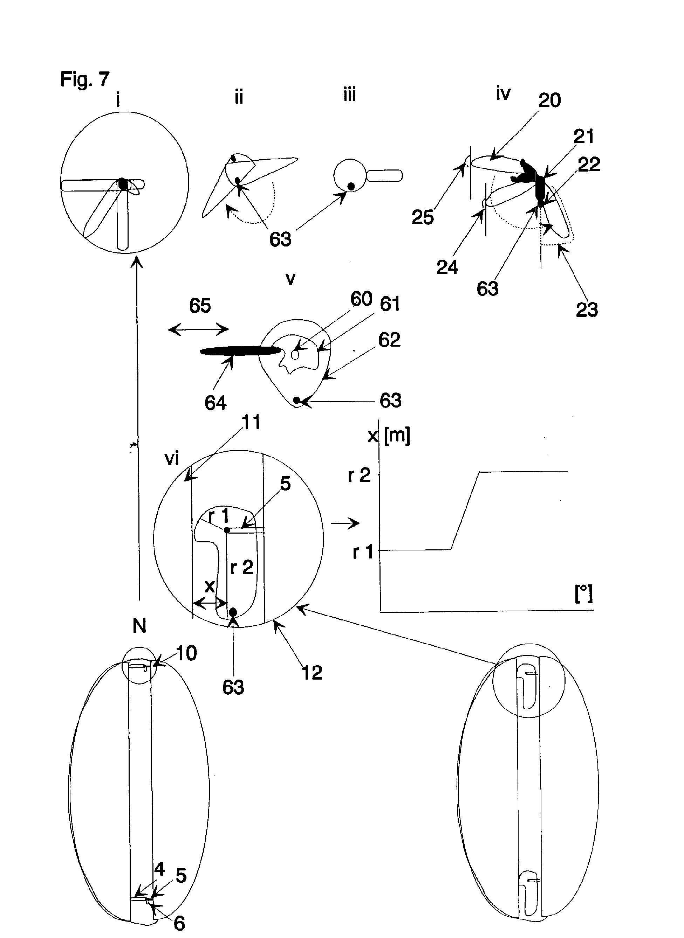

- **Fig. 4a**: Schematische Ausführungen i am Beispiel der Fig. 4, die nach dem Wirkungsprinzip der in Fig. 2, am Beispiel "A" für Position 90° und 0° gegeben sind, jedoch mit Varianten die ausgeführt werden können. In Variante ii ist gezeigt, dass man die Grenze des mit dem Behälter, als 8 in Variante v oder wie aus Fig. 6 Seitenansicht im oberen rechten Bildteil ersichtlich, in Kontakt stehenden Elements 12, wie mit einem gestrichelten und einem durchgezogenen Pfeil angedeutet, verschieben kann. Es ist veranschaulicht, dass z.B. diffraktive Elemente, mit der Nummer 12 in Variante iv gekennzeichnet, und z.B. Elemente mit multifokalen Eigenschaften mit den Nummern 90 bis 94 ausgeführt werden können. Zur Verbindung der optisch wirksamen Elemente kann beispielsweise auf die in der Fig. 7 vorgestellten Varianten i bis vi oder auf das Element 54 aus ursprünglich Fig. 4 verwiesen werden. Auch können Laschen und Kombinationen aus Fig. 6, mit 9 bezeichnet, sowie das Element 10 mit den in Fig. 7 gegebenen Varianten als Mittel gemäß der Beschreibungen verwendet werden. Die Variante iii hat ein mit dem Behälter fest verbundenes Element 13, dass zwischen dem Behälter und dem optisch wirksamen Element noch einen Hohlraum aufweisen kann, der entweder ausgefüllt oder leer sein kann. In Variante v ist ein Beispiel einer Laschenkonstruktion nach Fig. 6 mit den Verbindungspunkten 1 und 2 und einer Zwischenlaschenposition mit Nummer 3 gezeigt, die Teile der Ausführungen sein können. Variante iv zeigt, dass die Strukturierung der diffraktiven Elemente gegenläufig oder in inverser Weise, je nach Brechzahlverhältnis des Elements und seiner Umgebung, auch wie in Variante vi in Kombination mit multifokalen Elementen ausgeführt werden kann. Die Gestaltungsmöglichkeit diffraktive Elemente nutzen zu können, gilt auch für Elemente, wie die Variante iv zeigt, bei der wieder ein optisch wirksames Element fest am Behälter befestigt sein kann, aber auch für die Kombination mit multi-fokalen Elementen wie aus der Variante vi. Die Möglichkeit eine variierende Bauhöhe zu gestalten, ist durch "D" und den Pfeilen rechts veranschaulicht.
- **Fig. 5**: Die schematische Seitenansicht des Elements 54 im linken Bildteil der Fig. 5, wie auch in Fig. 4 angedeutet, kann sich beispielsweise aus einer Flachfeder 32, die in einem frei stehenden Zylinder 34 befestigt und untergebracht ist, der sich in den Zylinder 33 schiebt, zusammensetzen. Das Element 54 ist beispielsweise in drei verschiedenen Winkeln zu wirkenden Vektoren dargestellt, wobei die unterste Position dem Fall entspricht, bei dem das System maximale Brechkraft aufweist. Der mit der Nummer 35 und geschweifter Klammer angedeuteter Bereich könnte durch eine gekrümmte Kavität 31 ausgeführt sein, in der eine schwere, nicht magnetische Kugel 30 läuft, die in die Mulde 36 passt, die an verschiedenen anderen Positionen auch ausgeführte werden kann. Durch die genaue Gestaltung der Mulde sowie der Passung der Zylinder 33 und 34 sowie der Federkonstanten der Feder 32 ließen sich die gewünschte Tribotechnikvariablen, wie z.B. Haftreibung anwendungsabhängig einstellen und dimensionieren. Die Zylinder 33 und 34 sind Teil der beweglichen optischen Elemente der Figur 4. Das Element 54 ist im linken Bildteil in seinen operationellen Stellungen dargestellt, wobei die unterste Seitenansicht die Stellung, beziehungsweise Spaltbreite beschreibt, die bei 90° mit einem nach dem Pendelprinzip arbeitendem System erreicht wäre. Im rechten oberen Bildteil ist eine Aufsicht des Elements 54 angedeutet, in der deutlich wird wie die Kugel 30 in der Kavität 31 bewegt werden müsste, durch entsprechende Bewegung des Gesamtsystems durch das Vektorfeld, z.B. durch eine gezielte Kopfbewegung um entweder in - oder aus der Mulde 36 zu gelangen. Im unteren rechten Bildteil ist die Aufsicht des in Fig. 4 beschriebenen Systems mit beispielsweise zwei Elementen 54 gezeigt. Ein Element mit der Funktion gemäß des Elements 54 kann auch nur einmal oder noch häufiger in das Gesamtsystem integriert werden.
- **Fig. 6**: Die Systemaufsicht, mit einem Durchmesser von beispielsweise 6 mm, in Richtung der optische Achse, wobei die beispielsweise vier verdrehten, federnden und elastischen Laschen, mit Nummer 9 angezeigt, die Verbindung zwischen den beiden gegeneinander beweglichen Elemente 11 und 12 in einem hermetischen, transparenten Behälter 8 bilden. Durch die Gestaltung z.B. des Randes des Elements 11 oder der Laschen mit der Nummer 9, deren z.B. Rauhigkeits- und Krümmungsradienwahl, oder andere Auswahlkriterien ihrer Beschaffenheit, können sich die Variablen der Tribotechnik einstellen lassen. Das durch die Nummer 8 gekennzeichnete Element bezeichnet wieder, wie auch schon in der Fig. 5 angedeutet, einen z.B. hermetischen Behälter. Die Laschen und die Verbindungstechnologie kann, wie bei 8, mit im sichtbaren Spektrum optisch transparenten Materialien ausgeführt werden. Dabei wäre eine solche Lasche 9, die hier z.B. in einer Vierer-Kombination gezeigt ist, an der Stelle 1 auf der z.B. flach(ere)n Oberfläche des Elements 12 wirksam zu befestigen und das andere Laschenende z.B. am Rand des Elements 11 ebenso wirksam anzubringen. Die Sequenz der Seitenansichten "K", "L", "M" und "N" verdeutlicht schematisch die Laschenbewegung, bei der Bewegung der Elemente 11 und 12 zueinander beispielsweise nach dem in Fig. 2 erläuterten Wirken von Kräften. In Seitenansicht "M" und "N" sind die Laschen 9 in der Aufsicht gekennzeichnet, der Deutlichkeit wegen weggelassen und Position "N" entspräche wieder, wie in Fig. 5 bereits angedeutet, der Position bei der das System die maximale Brechkraft entlang der optischen Achse aufweisen würde. Natürlich ließe sich die gezeigte Bewegung auch ebenso berührungslos mit anderen Kraftfeldern und dazu entsprechend ausgeführten Antriebsmechanismus bewerkstelligen. Die Lasche 9 könnte somit, wenn entsprechend in Qualität und Quantität ausgeführt, die Funktion der mechanischen Führung und die Rückstellung des in Fig. 5 gezeigten Elements 54 substituieren. Die Funktion der Arretierung in einer gewünschten, beliebig im Stellbereich zu wählenden Position, wie in Fig. 5. durch Kavität 31 und Kugel 30 sowie Mulde 36 beispielhaft ausgeführt, kann durch das mit Nummer 7 bezeichnete schematische Element an einer Zwischenlaschenposition mit Nummer 3 ebenfalls erreicht werden. Element 7 könnte beispielsweise mit Element 11 zusammenrasten und durch eine Bewegung des Gesamtsystems und der Trägheit des Elements 11 entriegelt werden. Auch wäre es möglich, das Element 7 aus einem Material zu fertigen, dass durch einen in der Augenoptik gebräuchlichen Laser erwärmt werden könnte und somit beispielsweise Element 11 auf berührungslose Weise und irreversibel zu verbinden. Das beispielsweise anisotrop ausgeführte Element 10, bestehend aus einer Halterung 5, die an dem Element 12 wirksam befestigt wäre, sowie z.B. einem Gewicht oder Schwimmer 4 und einem Gegenspieler oder Raster 6, bezeichnet ein nach den in z.B. Fig. 2 erläuterten Prinzip angetriebenes Element, welches einmalig oder in annähernd beliebiger Anzahl integriert werden könnte.
- **Fig. 7**: Die Schemen der verschiedenen Ausführungsmöglichkeiten des Elements 10, das in seiner Variante, i, mit der längsten Erstreckung und dem Schwerpunkt in einem einzigen Körper, mit Nummer 4 nach Fig. 6 bezeichnet, eine Kreisbahn beschreiben würde und bei stärkster Kraftvektorwirkung gemessen am anwendbaren Winkel auch direkt zur maximalen Entfernung zwischen den Elementen, wie in Fig. 5 bezeichnet, 11 und 12 resultieren würde. Bei Variante ii würde durch die verschiede Lokalisation von längster Erstreckung des Körpers und beispielsweise Gewicht mit Nummer 63 bezeichnet, die Verschiebung der Elemente beispielsweise 11 und 12, dem beispielsweise in Fig. 2 mit "A" bezeichnetem Beispiel eine geringere Entfernung zwischen Elementen 11 und 12 bewirken als bei der Variante i. Variante iii verdeutlicht das durch Angabe einer Position, gemäß Fig. 2 für Beispiel "A", die beispielsweise bei O° anzutreffen wäre. Bei Variante, iv wird anschaulich, dass man durch Senkungen wie mit Nummer 23 und gestrichelter Linie bezeichnet, solche wie hier beschriebene Elemente flachbauend ausführen kann: Die hier beispielsweise leichtere, längste Erstreckung würde in eine solche Senke zurückgestellt. Die Nummer 63, bei Variante iv bezeichnet wieder die Gewichtsposition und die Nummer 21 ein Element, das um einen Drehpunkt durch eine Halterung wie bei Variante vi mit Nummer 5 bezeichnet, laufen kann. Variante iv hätte wieder, wie bei Variante ii schon erwähnt, die längste Erstreckung mit Nummer 20 gekennzeichnet, nach Fig. 2 für Beispiel "A" um, z.B. ca. 32° verschieden von der Gewichtposition an die maximale Entfernung zwischen den Elementen, wie in Fig. 5 bezeichnet, 11 und 12. Das Element 20, der Variante iv, kann durch verschiedene Mulden, mit Nummer 24 und 25 bezeichnet, in verschiedenen Stellungen wirksam oder auch durch alle anderen die Tribotechnikvariablen beeinflussenden Maßnahmen ebenso gehalten werden, um eine, durch die Bewegung des optischen Systems im Vektorfeld, reversible Festsetzung in bestimmten Positionen zu ermöglichen oder beispielsweise auch durch einen Minimaleingriff eine irreversible Festsetzung leisten. Variante v würde bei einer Rotation um das Achsenelement 60, nach beispielsweise Fig. 2 für Beispiel "A", somit als Gewicht 63, Kräfte auf die Platte 62 übertragen, die mit einer Nockenscheibe 61 festverbunden ist, sodass sich im Stellbereich, der mit Nummer 65 schematisch gezeigt ist, beliebige, nicht-lineare Bewegungen des Stößels, mit Nummer 64 gezeigt, als Funktion des Rotationswinkels der Drehung, der wiederum auf Element 11 oder 12, wie in Fig. 5 bezeichnet, wirken könnte. Die Variante vi verdeutlicht mit dem rechts daneben befindlichen Diagram, Winkel als Funktion vom Abstand, wie verschiedene Radien oder Nockenzüge, r1 und r2, verschiedene Entfernungen, wie z.B. zwischen den Elemente 11 und 12 bewirken könnten und wie diese Variante mit dem System, hier ohne Versenkungsmulde 23 der Variante iv, gebracht werden könnte. Die Laschen, die in Fig. 6 mit der Nummer 9 bezeichnet sind, wurden hier wieder in Fig. 7 zur Verdeutlichung weggelassen.

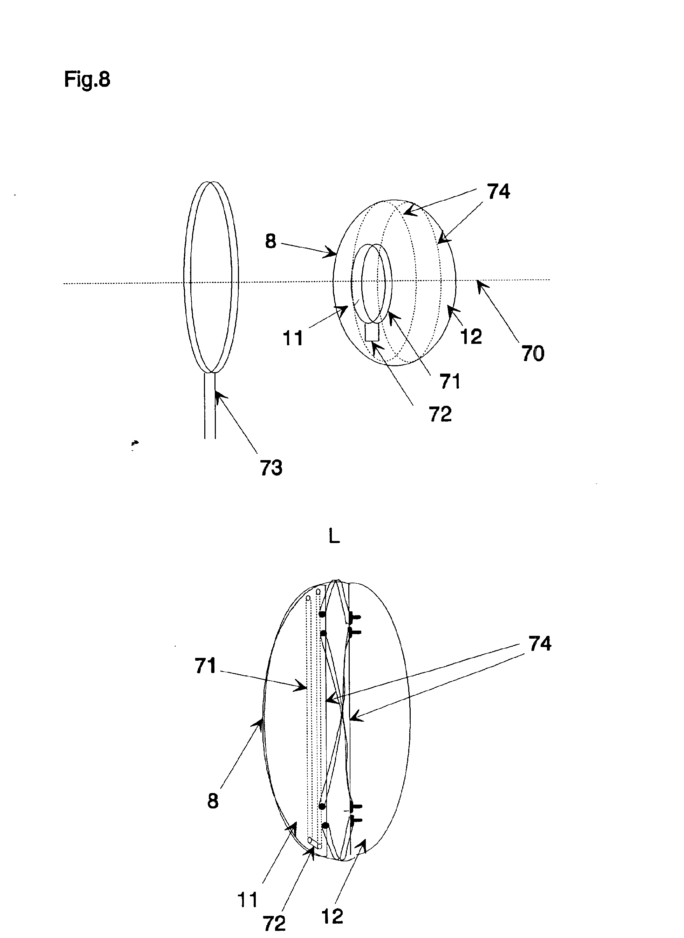

- **Fig. 8**: Im oberen Bildteil ein schematisiertes, optisches System mit zwei aus elektrischen, nicht magnetischen Leitern bestehenden Ringen, jeweils mit Nummer 71 versehen, die eine Spule bilden, die durch das Leiterstück 72 möglicherweise am optischen wirksamen Elementrand kurzgeschlossen sind, wobei 70 die optische Achse des Systems bezeichnet. Die Nummer 73 bezeichnet eine zu dem optischen System extern befindliche Spule die mit Wechselspannung versorgt wird. Um eine mögliche Analogie beispielsweise zu der Stellung "L" aus der Fig. 6 zu erleichtern, bezeichnet 11 und 12 wieder die beiden optisch wirksamen Elemente aus der Fig. 6, wie auch im unteren Bildteil zu entnehmen und 74 die Ränder dieser Elemente im oberen Bildteil, sowie die Nummer 8 den hermetischen Behälter. Die in die optisch wirksamen Elemente integrierten Leiter 71 und 72 können sowohl aus ultrafeinen nicht magnetischem Metalldraht mit niedrigem elektrischen Widerstand, als auch aus elektrischenleitendem transparenten Kunststoff ausgeführt werden.

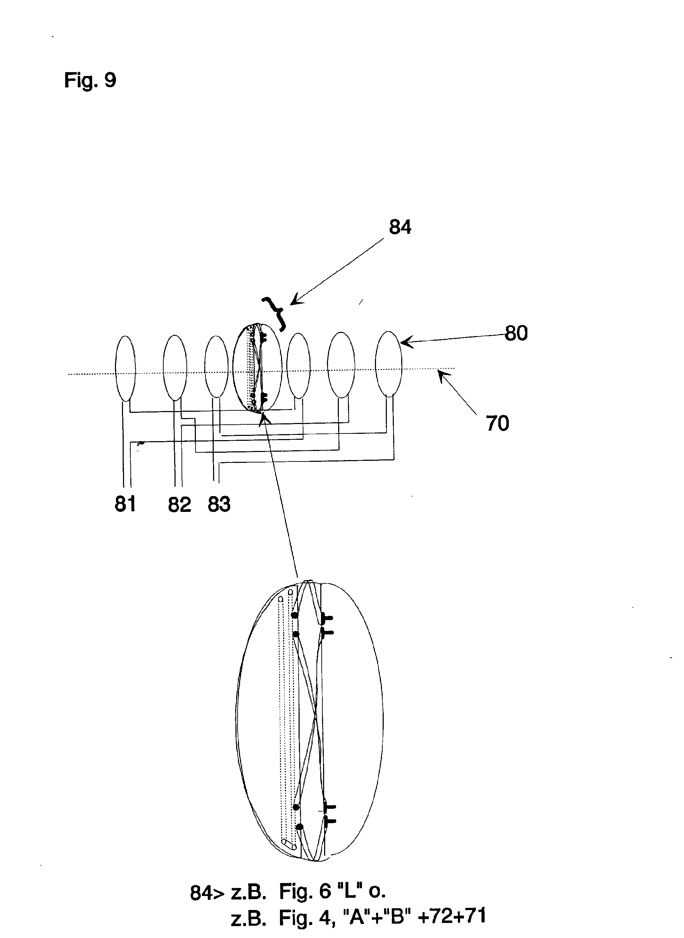

- **Fig.9**: Im oberen Bildteil eine Ausführung der Erfindung, die nach dem polysolenoid-linear Motorprinzip, mit z.B. drei, gezeigt sechs, oder neun usw. Spulen 80, und mit drei Phasen-Stromversorgung, 81, 82 und 83 gespeist werden kann und in der 70 wieder die optische Achse des erfundenen Systems bezeichnet. Das Element mit der Nummer 84 bezeichnet, beispielsweise das optische System aus der Fig. 8 entsprechend oder aber auch beispielsweise das System aus der Fig. 4, wobei eine z.B. transparente und kurzgeschlossene, nicht magnetische Spule wie 71 und 72, gemäß der in Fig. 8 gegeben Beschreibung integriert ist.

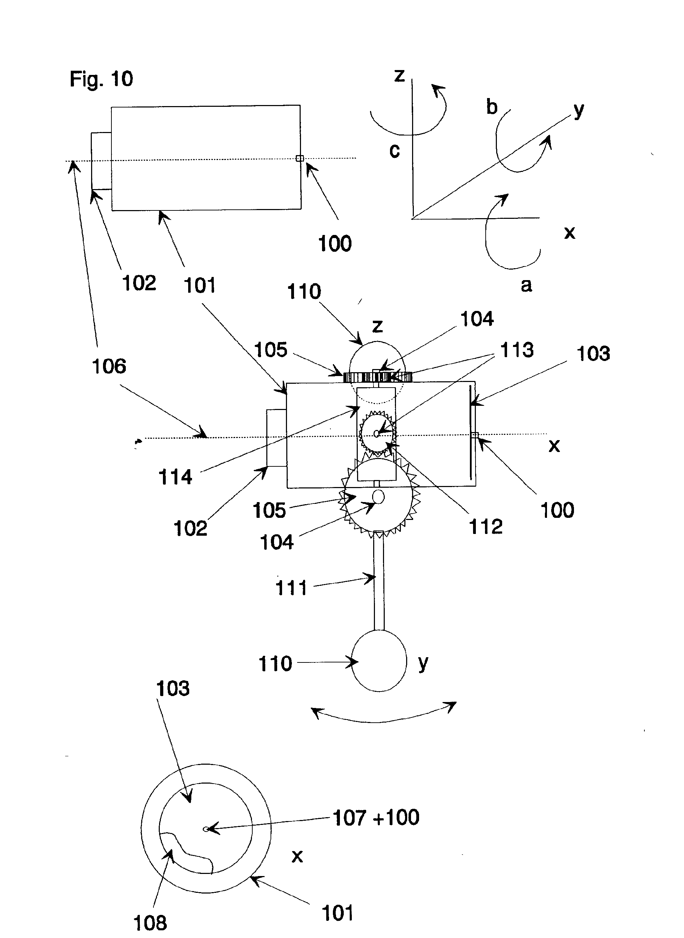

- **Fig. 10**: Ein Teil des Beispiels einer optischen Vorrichtung, die gemäß den gemachten Erfindungen und dem Beispiel in Fig. 2, "A" ausgeführt sein kann, wobei gemäß des linken oberen Bildteils 106 auch die optische Achse des Systems ist, 101 die äußere Gehäusewand darstellt, 102 eine Apertur sein kann, die am Eingang des optischen Systems sein kann, und 100 den Brennpunkt des optischen Systems bezeichnet. Im rechten oberen Bildteil ist ein Koordinatensystem mit den Raumachsen x, y, und z, sowie den in diese Richtungen möglichen Achsenrotationen a, b, und c gezeigt. Bei auf unendlich eingestellten optischen Systemen sind translative externe Störungen für die Funktion des optischen System bedeutungslos. Darunter befindet sich das vollständige Beispiel der schematischen optischen Vorrichtung, wobei wieder 106 die optische Achse bezeichnet, und 114 ein optisch wirksames Element, dass sowohl eine diffraktive, als auch eine auf Brechung beruhende Wirkung auf die durch die Eingangsapertur 102 fallende Strahlung haben kann. Das optisch wirksame Element 114 ist gemäß der zwei Achsen des abgebildeten Koordinatensystems, beispielsweise in Richtung von z- und y-Achse drehbar um die Achse 113, die in zweifacher Ausfertigung gemäß der Raumachsen z und y des Koordinatensystems vorhanden sein kann, in dem Gehäuse 101 aulgehängt. Das Gewicht mit der Nummer 110, die Pendelstange 111 und dem mit der Pendelstange festverbundenen Zahnrad 105, sowie die an das Gehäuse 101 angebrachte Achse 104 bezeichnen ein Wirkungsmechanismus, der bei einem auf einer Umlaufbahn befindlichen Körper gemäß der von dem Körper erfahrenen Beschleunigung oder auch Beschleunigungsstörung eine Drehbewegung auf das Zahnrad 112 überträgt, die wiederum das optisch wirksame Element 114 bei reibungsarmer Lagerung, dreht. Das Übersetzungsverhältnis zwischen den Zahnrädern 112 und 105 wird von der optischen Wirkung des Elements 114 bestimmt, d.h. je höher beispielsweise die Brechkraft des Elements 114, um so geringer ist die benötigte Verstellung des Elements 114, um die eintreffende Strahlung trotz wirkender externer Störung auf den Brennpunkt zu richten. Erfolgt eine Störung, die eine Rotation wie a um die x-Achse erwirkt, bleibt das Element mit der Nummer 103 aufgrund des in ihm eingebauten Gewichts 108 und der daraus resultierenden Trägheit in seiner Position bei reibungsarmer Lagerung um die Achse parallel 107 und der optischen Achse so konstant, dass die einfallende Strahlung auf den Fokus 100, der auf dem Achsenaustritt von 107 liegt. Die Aufsicht in Richtung der optischen Achse einer möglichen Störungskompensation ist im unteren Bildteil angegeben.

Ausgehend von der relativen optischen Systemlage zu dem Verlauf des Kraftvektorfelds, wie in Fig. 1 gezeigt, ist es bei Kenntnis der Bauelementgewichte, deren Dichten oder Kenntnis der elektrodynamischen Größen, wie elektrischer Induktion und induzierter Bewegung sowie den tribologischen Eigenschaften des Systems, möglich die auf das System wirkenden Kräfte zu bestimmen, wenn man davon ausgeht, dass die Feldlinien und ihr Verlauf in einem festen Referenzsystem bekannt sind. Würde man nur beispielsweise zwischen einem Schwimmer und einem Pendel oder Gewicht, somit durch die Erdbeschleunigung, beziehungsweise der Schweroder Gravitationskraft, angetriebene Systeme differenzieren, würden durch ein Pendel und einen Schwimmer entgegengesetzte Bewegungen auftreten, wie in Fig.2 schematisiert. Entsprechend vergleichbar reagiert, z.B. ein aus magnetischen Materialien gefertigtes Pendel oder ein durchflossener Leiter in externen Magnetfeldern. Auch ein Heraus- oder Hereinbewegen in inhomogene, elektro-magnetische Felder, wie bei para- oder diamagnetischer Materialien zu beobachten, kann für Systeme der gemachten Erfindung verwendbar sein. Verallgemeinernd kann man die Wechselbeziehungen zwischen beweglichen, obengenanten Teilen z.B. bedingt durch die Trägheit, den Auftrieb und/oder magnetische Induktion und den entsprechenden Vektorfeldem als Antriebssysteme definieren. Bei genauer Analyse der möglichen Beschleunigungsverhältnisse am Kopfe eines Menschen, bzw. am sich bewegenden Auge, die durch den Träger durch selbstgesteuerte Bewegungen im alltäglichen Leben möglich sind, wird man finden, dass durch diese Bewegungen und auch im Zusammenwirken mit der beispielsweise Gravitationskraft zu bevorzugende Wirkungsverhältnisse von optischen Augenlinsensysteme dimensioniert werden können. Das optische System der Erfindung kann diese Dimensionierung nutzen. Patienten, die bei einer gewissen Winkelstellung eine Bewegung eines optischen Elements wünschen, könnten nach Fig. 3 frei eingestellte Tribotechnikvariablen, die für sie ausgemessen wurden, nutzen. Der in Fig. 3 mit einer geschweiften Klammer beispielsweise bezeichnete Winkelbereich kann in der Praxis annähernd zu einer unstetigen Situation führen, da der Winkelbereich mit einer großen Abstandsänderungen schlecht mit einer freien Kopfhaltung gefunden und reproduziert werden könnte. Es lassen sich daher durch geeignete Wahl der Tribotechnikvariablen und der Bewegungscharakteristik der optisch wirksamen Elemente diese Unstetigkeiten nutzbar machen. An der Systemcharakteristik des Beispiels in Fig. 3 wird deutlich, dass meist aber zur Überwindung der beispielsweise wirkenden Haftreibung rückstellende Federn nötig sind z.B. um ein Element wie 11 in Fig. 6 in die Position für Fernsicht entgegen der Richtung der Erdanziehung zu bewegen.Natürlich ließe sich diese Rückstellung auch durch eine entgegen der Richtung der Erdanziehung auszuführende Kopfbewegung für das Antriebssystembeispiel Pendel beispielsweise nach 345° gemäß der in Fig. 1 gemachten Konvention bewirken. Die genaue Dimensionierung dieser Tribotechnikvariablen, auch patientenspezifisch, kann der Ausführung der gemachten Erfindung derartig voraus gehen, dass Sehschärfen vom Patienten kontinuierlich, definiert und reproduzierbar eingestellt werden. Fig. 4 zeigt zwei Systeme, die nach beiden oben genanten Antriebssystembeispielen arbeiten. Das Element 54 in Fig. 4 kann zudem in der Häufigkeit seiner Ausführungen, einfach oder mehrfach, und durch Variationen beispielsweise der Passungsformen der Zylinder 33 und 34, wie in Fig. 5 bezeichnet, zu definierten optischen Elementverkippung beitragen, die durch die Verwendung von polarisierenden oder doppelbrechenden Medien gewünschte Verbesserung in Brechkrafteinstellungen bei z.B. möglicher flacherer Systemgesamtbauweise oder bei Herausstellung von anderen gewünschten Eigenschaften und Verbesserungen des optischen Systems beitragen. Auch kann die Neigung des Elements 54 mit den Zylindern 33 und 34, gegenüber anderen Elementen, wie z.B. 11 und 12 in Fig. 6, so verändert werden, so dass Translationen der optisch wirksamen Elemente, der eingesetzten Tribotechnik gemäß, in eine Richtung begünstigt oder erschwert werden. Die Fig. 5 gibt ein Beispiel einer Systemausführung bei der ein Patient willentlich die beweglichen optisch wirksamen Elemente an bestimmten Positionen festsetzen kann. Die Mulde 36 in Fig. 5 könnte wiederholt entlang von z.B. Zylindern oder Vergleichbarem, die mit beweglichen Elementen in Verbindung stehen, zusammen mit den nötigen Kavitäten, wie z.B. 31, oder Ausweitungen sowie Teilen mit mechanischer Sperrfunktion wie z.B. die Kugel 30 ausgeführt werden. Die Anzahl und Anordnung aller hier erwähnten Elemente ist von der Bauausführung des System abhängig und ist Gegenstand der gemachten Erfindung. Die Kavität 31 oder damit im Zusammenhang stehende Gestaltungen, die die Beschleunigung und Richtung zur Elementfestsetzung diktieren würden, könnten Patiententypuskategorien entsprechend in gradierten Stufungen ausgeführt werden. Die Führungsfunktion während der Bewegung der optisch wirksamen Elemente, wie durch das Element 54 in Fig. 4 beispielhaft ausgeführt, kann durch spezielle Haptiken oder speziell Laschen wie in Fig. 6 schematisiert, übernommen werden. Die in Fig. 6 beispielhaft gezeigte Ausführung kann zur Steigerung der Drehbewegung des bewegten Elements, wie z.B. dass Element 11 in Fig. 6, unter der Anforderungsberücksichtigung von speziellen Materialien optimiert werden, sodass polarisierende, interferierende oder doppelbrechende Materialeigenschaften zur Eliminierung von eingangserwähnten Streulichthöfen, oder Licht- und Kontrastschwächen bei beispielsweise Verwendung von multi-fokalen oder diffraktiven optischen Elementen beitragen. Auch ließe sich eine Laschenkonstruktion, die einzelne Laschen, wie mit Nummer 9 in Fig. 6 beispielhaft ausgeführt, aus einer einzigen Folie, bestehend beispielsweise aus transparenten Kunstoffen wie z.b. Mylar oder andere Polyesterfolien, herstellen, die als ein Stück auf - oder in die Nähe des Umfangs - von optisch wirksamen Elementen angebracht werden können. Das Anbringen von Mikrobolzen, das Ausführen von Nut- oder Einschweiß- oder Eingießtechniken, wie bei der Verarbeitung von Kunstoffen üblich und Stand der Technik, können zu durablen Verbindungen bei der Ausführung der Systeme dieser Erfindung führen. Spangen, wie mit Nummer 7 in Fig. 6 angedeutet, mit speziellen Materialbereichen, die entweder hohe Absorption gegenüber in der Augenoptik verwandte Laser zur Kerato-Chirurgie aufweisen oder die besonders niedrig schmelzen und sich möglicherweise mit ihrem Gegenstück, beispielhaft auf Element 11 in Fig. 6 befindlich, verbinden, können zur Schaffung von festen Verbindungen genutzt werden, die ohne Operation, Entnahme oder Auseinanderbau des optischen System irreversibel sind um Patientengruppen zu helfen, die entweder mit dem Tragen des Implantats von Beginn an unerwartete Schwierigkeiten haben oder die eine Krankheit aufzuweisen beginnen, die am Zeitpunkt der Implantation sich noch nicht manifestiert hatte. Einige beispielhafte Einbau- bzw. Ausführungsmöglichkeiten des Elements 10 in Fig. 6 sind in Fig. 7 schematisiert beschrieben. Die Abstandsänderung zwischen zwei oder mehreren, wie in der vorliegenden Erfindung beschriebenen, optisch wirksamen Elementen, als Funktion der Winkeländerung des Kraftvektorfelds gegenüber der Bewegung des optischen Systems, verläuft linear mit dem Kosinus des Neigungs- oder Bewegungswinkels. Diese Charakteristik würde von einem Element 10 der Fig. 7 nach Variante i erfüllt. Auch nahezu beliebige Bewegungsabläufe eines Elements oder eines auf ein Element wirkenden Stößels wie durch Varianten iv und v der Fig. 7 beispielhaft dargestellt, können bei Ausführungen der Erfindung optimierbar gestaltet werden. Durch die Abstandsvariation der Separierung der Position der längsten Erstreckung, wie z.B. Element 4 in Fig. 7, von der Position an der sich das Gewicht oder ein Schwimmer oder ein Leiter befinden kann, Element 63 in Fig. 7, wie z.B. in den Varianten ii und iii schematisiert, lassen sich definierte Dämpfungen oder zeitlich Verzögerungen der Stellfunktion erreichen. Die Stößel, Nockenzüge oder -scheiben, Excenter, wie in Fig. 7 beispielhaft gezeigt, können diskret in angrenzende Elemente versenkt werden um Bauvolumen geeignet zu verkleinern. Die Mulden wie in Variante iv, der Fig. 7 schematisiert und durch Nummer 25 und 24 beschriftet, können so gewählt werden, gemäß des Beispiels der Mulde 24, dass sie entweder zu einer temporären, reversiblen, vom Träger intendierten Festsetzung - also durch Bewegung des optischen Systems im Kraftvektorfeld erzeugt - führen, oder sie können, gemäß des Beispiels der Mulde 25, beispielsweise mit einem Mikroabsorber oder Mikroreflektor ausgestattet werden um mittels eines intensiven Laserstrahls in die entsprechende Position gebracht zu werden, die durch den Träger nicht eingestellt werden kann und die somit vorläufig - ohne Anwendung der gleichen Laserbehandlung - irreversibel bleibt. Auch ließen sich an der Oberfläche z.B. der Laschen 9 in Fig. 6 Rauhigkeiten oder Rasten gezielt setzen, die den Rand des optisch wirksamen Elements so überstreichen könnten, das geeignete reversible temporär gewollte oder irreversible Feststellpositionen erreicht werden können. Auch das Setzen von Schmelzperlen auf der Lasche 9 und das Herstellen fester Verbindungen mit anderen Elementen, wie schon in der Beschreibung der Nummer 7 in Fig. 6 beispielhaft angedeutet, mittels Laser kann Gegenstand der gemachten Erfindung sein.

Fig. 8 kann eine mögliche Ausführung der Erfindung sein, die eine Stellung und Bewegung beispielsweise des optisch wirksamen Elements 11, wie aus den vorhergehenden Figuren eingeführt, durch elektrodynamische Prozesse bewirkt. Die integrierte Spule mit Nummer 72 gekennzeichnet ist z.B. am Spulenanfang und -ende miteinander verbunden. Die Spule, die mit Nummer 73 bezeichnet ist, befindet sich außerhalb des optischen Systems und wird mit einem Wechselstrom versorgt und stößt die kurzgeschlossene Spule 72 ab, da der in ihr induzierte Strom seiner Ursache nach der Lenz'schen Regel entgegengesetzt ist. Dieser Bewegungsimpuls ließe sich entweder durch eine zweite Spule wie 73 auf der anderen Seite im oberen Bildteil anzuordnen, umkehren, wobei aber auch schon das Bewegen der Spule 73 an die andere Bildseite einen ähnlichen, zu Bewegungen des z.B. Elements 11 führenden Effekt bewirken würde. Wie bereits oben beschrieben, könnte die dem Vektorfeld entgegengesetzte Rückstellung auch durch eine Feder oder Lasche 9 erfolgen. Ein annähernd statisches Magnetfeld der Größenordnung von 2T, das typischerweise bei magnetischer Resonanz Diagnostik verwendet wird, würde keinen Strom in der Spule 72 induzieren, und somit keine Kraftwirkung erzeugen, wenn man von den geringen para- und diamagnetischen Kräften absieht, die in der Größenordnung des umgebenen Gewebes liegen. Eine weitere Variante der in Fig.8 vorgestellten beispielhaften Ausführung, kann in der vorliegenden Erfindung enthalten sein, die eine Integration eines Mikrokondensators in die kurzgeschlossene Spule 71 vorsieht, die derzeit schon im Handel mit Maßen von ca. 0.8 x 1.4mm gebräuchlich sind. Ausführungen mit Kondensatoren aus transparenten Materialien oder transparente elektrische Komponenten überhaupt, an denen geforscht wird, können Gegenstand der gemachten Erfindung sein. So wird ein elektro-magnetischer Schwingkreis erhalten, der es ermöglicht, eine bestimmte Frequenz des Wechselstroms zu wählen um somit eine Resonanzüberhöhung zu bewirken, die entweder zu einer Steigerung der zu nutzenden Stellkräfte führen kann oder eine geringere Anregungsfeldstärke des äußeren Anregungsfeldes bewirkt. Dies ermöglicht auch einen längeren Arbeitsabstand zwischen optischem System der Erfindung und dem externen Felderzeuger. Durch geeignete Wahl des Kondensators lassen sich Resonanzfrequenzen wählen, die weit außerhalb der magnetischen Resonanz der verwendeten medizinischen Diagnostik liegen. Das externe Feld könnte z.B. mittels verschiedener externer Spulen, wie 73 in Fig. 8, z.B. in Möbel, Verkehrsmittelsitzen oder Kopfbedeckungen etc. integriert werden um den Verhältnissen entsprechend das optische System zu Akkomodationswechsel zu bringen, die sowohl optische Systembewegungen im Vektorfeld, als auch geänderte Stromversorgung an der Spule gestatten.

Eine ähnliche Betriebsmöglichkeit mit externen, beispielsweise elektro-magnetischen Vektorfeldern wird durch die Ausführung in Fig. 9 ermöglicht: Der Dreiphasenstrom auf den Spulen 81, 82, 83 erzeugt ein Wanderfeld, das jeden in der Spulenkonfiguration befindlichen leitfähigen Körper, also auch die Elemente 71 und 72 aus Fig. 8, bewegen kann. Die Bewegungsrichtung hängt von der Phasenlage der Ströme ab. Die in Fig. 8 und 9 gezeigten Ausführungsbeispiele können auch betrieben werden, indem man nur elektrischen Strom leitende Komponenten oder Elemente wie beispielsweise alle Varianten der Figur 7. der optischen Systeme verwendet um entweder die Tribotechnikvariablen oder die eigenständigen Elementbewegungen entsprechend der Anforderungen variiert oder einstellt.

Werden Auftriebs- oder Gewichtskräfte nutzbar in Form der dargestellten Antriebssysteme verwendet, kann, wie eingangs angedeutet, auf eine externe Stromversorgung verzichtet werden. Dieser Vorteil ist besonders weitreichend, wenn die optischen Systeme an schwer zugänglichen Orten oder unter Bedingungen, bei denen Energie begrenzt ist, wie beispielsweise bei Implantaten, auf See- oder Geländefahrzeugen oder Satelliten betrieben werden sollen. Eine Möglichkeit beispielsweise die Gewichte 108 oder 110, wie in der Fig. 10 gezeigt, durch Leiter oder Spulen mit oder ohne elektrische Bauteile zu ersetzen, kann die in Fig. 10 gezeigte Beispielausführung mit den in Fig. 8 und Fig. 9 gezeigten Ausführungen kombinieren. Die in Fig. 10 schematisierte Ausführung benutzt hingegen ein optisches System, das im Prinzip für alle Einsatzbereiche bei denen Stromversorgung problematisch ist und gleichzeitig häufige zu kompensierende Bewegungen anzutreffen sind, geeignet sein kann.

## Patentansprüche

1. In Brennweite verstellbares optisches System zur Sehschärfeneinstellung insbesondere zur Verwendung als implantierte Sehhilfe bis zur Ausrichtung von optischen Instrumenten bzw. deren Komponenten, die auf Himmelskörper-Umlaufbahnen betrieben werden.
**dadurch gekennzeichnet,**
**dass** optisch wirksame feste oder flüssige Elemente, die ein optisches System bilden, durch ein berührungslos von außen wirkendes Kraftvektorfeld oder mehreren in Qualität unterschiedlichen Krafivektorfeldem und deren absolute oder relative Änderungen mit einem eingebauten Antriebsmechanismus mit und ohne externer Hilfsenergie auf Gewicht, Schwimmer oder induzierte Ströme basierend, bewegt werden, derart dass sich Brennweite oder Abbildungseigenschaften des optischen Systems kontinuierlich, definiert und reproduzierbar verändern lassen.

2. System nach Anspruch 1, das sich zum Schutz vor äußeren Einflüssen in einem Behälter befindet.

3. System nach 2, wobei der Behälter Teil des optisch wirksamen Systems ist.

4. System nach 2 oder 3, zusätzlich mit Festkörpern und Flüssigkeit gefüllt, die optisch wirksam sind oder Teil des Antriebsmechanismus sind.

5. System nach 1 bis 4, bei dem die gesamte Funktionsweise, Stärke der Reibung von außen durch besagte Vektorfelder und Bauausführungen gesteuert wird.

6. System nach 1 bis 5, wobei der Antrieb oder bewegte Elemente beabsichtigt festgesetzt werden, bzw. wieder gelöst werden.

7. System nach 6, bei dem die Festsetzung durch Reibung oder Dämpfung bewirkt wird (Tribotechnik).

8. System nach 7, wobei jedoch die Festsetzung irreversibel ist.

9. System nach 1 bis 7, wobei die Brennweite bzw. eine andere optische Eigenschaft in Abhängigkeit aller wirkenden Kräfte entweder durch einen linearen oder einen nichtlinearen Funktionszusammenhang beschrieben wird.

10. System nach 9, wobei die durch ein externes Wechselmagnetfeld in Leitern induzierte Kraftwirkung als Antrieb des optischen Systems bzw. der Feststellvorrichtungen benutzt wird,

11. System nach 10, das die Verwendung von magnetischer Resonanz Diagnostik, wie in der Medizintechnik eingesetzt, zulässt.
